# DEMANDE DE BREVET EUROPEEN

(11) **EP 1 698 603 A1**
(43) Date de publication de la demande: **06.09.2006**
(21) Numéro de dépôt: 05447217.0
(22) Date de dépôt: 26.09.2005
(51) Int. Cl.: C04B 33/13, C04B 18/14

(54) **Procédé de fabrication d'éléments de construction en terre cuite**

(30) Priorité: 03.03.2005 BE 200500117
(71) Demandeur: Centre De Recherches Metallurgiques, 1200 Bruxelles (BE)
(72) Inventeur: Munnix, René, 4651 Battice (BE); Borlee, Jean, 4122 Neupre (BE)
(74) Mandataire: Van Malderen, Michel

(57) **Abrégé**

La présente invention se rapporte à un procédé de fabrication d'un élément de construction en terre cuite tel qu'une brique à partir de matières réfractaires tels que SiO₂ et Al₂O₃, des fondants tels que CaO, MgO, Na₂O et K₂O et des matières colorantes telles que Fe₂O₃ pour la couleur rouge, TiO₂ pour la couleur jaune et MnO pour la couleur noire, ledit procédé comprenant les étapes successives d'extraction des matières premières, de préparation d'une pâte, de moulage, de séchage et de cuisson, caractérisé en ce que des scories, de préférence des scories d'aciérie, sont ajoutées et mélangées à des argiles et à des schistes soit au début, soit au cours de l'étape de préparation de la pâte, en proportion comprise entre 5 et 50% en poids, de préférence entre 5 et 25% en poids, du mélange sec.

## Description

### Objet de l'invention

La présente invention se rapporte à un procédé de fabrication alternatif d'éléments de construction en terre cuite, tels que briques, blocs, tuiles, pavés, etc., à partir d'une pâte où on a substitué partiellement, en vue de les économiser, les matières premières non renouvelables utilisées habituellement telles que les argiles et les schistes.

Pour la simplicité de l'exposé, la méthode qui va être décrite concerne essentiellement la fabrication d'une brique en terre cuite, mais l'homme de métier comprendra aisément que ladite méthode peut s'appliquer aussi bien à la fabrication de tout autre élément de construction en terre cuite tel que bloc, tuile, pavé, etc.

### Arrière-plan technologique et état de la technique

### 1. Fabrication de briques en terre cuite

Il est connu que les briques en terre cuite sont fabriquées à partir de 9 éléments principaux:
- les matières réfractaires : SiO₂ et Al₂O₃ ;
- les fondants : CaO, MgO, Na₂O et K₂O ;
- les matières colorantes: Fe₂O₃ (rouge), TiO₂ (jaune) et MnO (noir).

Il est connu également que la fabrication de briques en terre cuite comporte 5 étapes clés : l'extraction des matières premières, la préparation de la pâte, le moulage, le séchage et la cuisson, que nous détaillons ci-après.

### Extraction des matières premières

Les argiles et les schistes nécessaires à la fabrication des briques sont généralement extraits dans des carrières proches des briqueteries afin de minimiser les coûts de transport.

### Préparation de la pâte

La préparation de la pâte comporte plusieurs opérations:
- un broyage grossier des argiles et des schistes ;
- une addition d'agents correcteurs, tels que du sable amaigrissant et de colorants qui sont généralement choisis parmi les oxydes métalliques suivants : Fe₂O₃, TiO₂ et MnO ;
- une pulvérisation finale du mélange pour obtenir une "poudre" fine ;
- une addition d'eau (jusqu'à 30%) pour obtenir une bonne plasticité et
- un malaxage pour' obtenir une pâte parfaitement homogène.

### Moulage

Le moulage est réalisé soit dans des moules à empreinte simple ou multiple, soit au moyen d'une étireuse :
- les moules sont sablés, puis remplis de pâte ; après démoulage, ils sont nettoyés à l'eau puis réutilisés ;
- l'étireuse produit une "colonne" continue de matière de section appropriée, telle qu'une section rectangulaire, qui est ensuite découpée, par exemple par fil, en briques individuelles.

### Séchage

Le séchage nécessite entre 2 et 4 jours. Il s'opère dans des chambres appropriées où la température et le degré d'humidité sont rigoureusement contrôlés.

### Cuisson

Le cycle de cuisson dure de 2 à 6 jours et se fait en 3 phases selon une courbe propre à chaque qualité de brique :
- une phase de préchauffage qui permet d'atteindre progressivement une température de l'ordre de 800°C ;
- une phase de cuisson proprement dite qui assure le frittage de la matière à des températures pouvant atteindre 1200°C, des modifications chimiques et physiques à ces températures permettant de former des liaisons céramiques ;
- une phase de refroidissement lent qui évite notamment la fissuration des briques et permet d'obtenir la bonne coloration.

### 2. Valorisation des co-produits de l'industrie sidérurgique

L'industrie sidérurgique qui produit essentiellement de l'acier génère en parallèle d'assez grandes quantités de co-produits qu'il n'est pas toujours aisé de valoriser. C'est ainsi que les scories produites à l'aciérie voient leurs débouchés se restreindre, qu'il s'agisse des scories produites au convertisseur à l'oxygène ou au four électrique.

Le convertisseur à l'oxygène génère entre 80 et 120 kg de scorie par tonne d'acier. Cette scorie contient essentiellement:
- 45 à 54% de CaO (dont 1 à 10 % de CaO libre) ;
- 11 à 18% de SiO₂ ;
- 1 à 5% d'Al₂O₃ ;
- 1 à 6% de MgO (dont une partie sous forme de MgO libre) ;
- 1 à 5% de manganèse total ;
- 14 à 22% de fer total (principalement sous forme d'oxydes).

Le four électrique génère environ 100 kg de scorie par tonne d'acier. Dans le cas de la production d'acier au carbone, cette scorie contient essentiellement:
- 25 à 35% de CaO (dont 0 à 4% de CaO libre);
- 8 à 18% de SiO₂ ;
- 3 à 10% d'Al₂O₃ ;
- 2 à 9% de MgO (dont une partie sous forme de MgO libre) ;
- 2 à 8% de manganèse total ;
- 20 à 30% de fer total (principalement sous forme d'oxydes).

La scorie produite par le convertisseur à l'oxygène peut être valorisée de différentes manières :
- elle peut être recyclée au haut-fourneau afin d'en récupérer le fer et le CaO. Cette pratique tend à disparaître car elle conduit à un accroissement non désiré de la teneur en phosphore dans la fonte (le phosphore est recyclé par la scorie) ;
- elle peut être utilisée comme engrais ou comme apport de chaux pour l'agriculture. Cet usage va en décroissant car la teneur actuelle en phosphore des scories a été réduite, ce qui en limite la valeur d'usage.

Par ailleurs, la scorie produite par le convertisseur à l'oxygène ainsi que la scorie générée par le four électrique lors de la production d'acier au carbone peuvent toutes deux être utilisées pour les travaux de génie civil, par exemple pour la construction de routes ou de barrages. Cet usage pose problème car la scorie n'est pas stable. En effet, le CaO libre et le MgO libre présents dans la scorie s'hydratent au cours du temps, ce qui engendre un gonflement néfaste à la stabilité des ouvrages.

Pour résoudre ce problème, une technique a été développée récemment. Elle consiste à transformer le CaO libre et le MgO libre en injectant du sable (SiO₂) et de l'oxygène dans la scorie liquide, c'est-à-dire avant son refroidissement, ce qui favorise la formation de silicates. Cette scorie stabilisée peut alors être utilisée sans problème pour les travaux de génie civil.

Cette dernière technique présente toutefois encore plusieurs inconvénients:
- elle nécessite un investissement en équipements ;
- elle consomme des matières premières (sable et oxygène) et surtout,
- elle ne permet plus de récupérer la majeur partie du fer métallique présent dans la scorie froide et habituellement récupérée par une opération de "déferrisation" (broyage de la scorie suivi d'une séparation magnétique du fer métallique) ; cela conduit à une perte non négligeable de fer.

Lorsqu'elles ne peuvent pas être valorisées, les différentes scories produites sont mises en décharge. Toutefois, cette pratique est progressivement interdite par la réglementation mise en place pour protéger l'environnement.

L'industrie sidérurgique est donc à la recherche de nouveaux débouchés pour les scories qu'elle produit.

### Buts de l'invention

La présente invention vise à fournir une solution qui permette de s'affranchir des inconvénients de l'état de la technique.

En particulier, l'invention a pour but de trouver une nouvelle voie de valorisation des scories produites notamment par l'industrie sidérurgique.

L'invention a encore pour but de mettre en oeuvre une solution bon marché ne nécessitant pas d'investissements lourds ou la consommation de matières premières supplémentaires.

L'invention a pour but supplémentaire de trouver un débouché de recyclage des scories alternatif au recyclage traditionnel en haut-fourneau ou comme engrais dans l'agriculture.

Un autre but de l'invention est d'éviter l'utilisation des scories dans des applications où les scories sont instables (présence de CaO et MgO libres).

Un but complémentaire de l'invention est de fournir une solution respectueuse de l'environnement.

### Principaux éléments caractéristiques de l'invention

La présente invention se rapporte à un procédé de fabrication d'un élément en terre cuite, tel qu'une brique, un bloc, une tuile, un pavé, etc., à partir des (9) éléments traditionnels suivants : des matières réfractaires (SiO₂ et Al₂O₃), des fondants (CaO, MgO, Na₂O et K₂O) et des matières colorantes (Fe₂O₃ pour la couleur rouge, TiO₂ pour la couleur jaune et MnO pour la couleur noire). Ce procédé comprend les étapes habituelles successives d'extraction des matières premières, de préparation d'une pâte, de moulage, de séchage et de cuisson. L'invention consiste spécifiquement à ajouter et mélanger des scories, de préférence des scories d'aciérie, à des argiles et à des schistes, soit au début, soit au cours de l'étape de préparation de la pâte, en proportion comprise entre 5 et 50% en poids, de préférence entre 5 et 25% en poids, du mélange sec, ce qui permet de remplacer partiellement et donc d'économiser des matières premières non renouvelables.

La scorie peut être introduite telle quelle ou après avoir subi une ou plusieurs opérations de conditionnement spécifiques telle que broyage, criblage, homogénéisation, déferrisation, carbonatation, activation ou stabilisation chimique, etc.

Au besoin, le mélange des argiles, schistes et scories peut subir une opération de déferrisation au cours de l'une des sous-étapes de préparation de la pâte et en tout cas avant addition d'eau.

Ainsi, les principaux composés présents dans les scories se retrouvent également présents dans les éléments de construction en terre cuite produits (CaO, SiO₂, Al₂O₃, MgO, MnO et oxydes de fer), ce qui permet une valorisation très avantageuse des scories et en particulier des scories d'aciérie.

Des modalités d'exécution préférées du procédé de l'invention sont détaillées dans les revendications 2 à 13.

### Description de formes d'exécution préférées de l'invention

L'idée à la base de l'objet de l'invention consiste à utiliser les scories d'aciérie comme constituants partiels de la pâte servant à la fabrication des briques en terre cuite car les principaux éléments présents dans les scories sont également présents dans les briques en terre cuite (CaO, SiO₂, Al₂O₃, MgO, MnO et oxydes de fer). Ci-après seront présentés deux exemples de modalités d'exécution avantageuses de l'invention qui se distinguent par la façon dont les scories sont introduites dans le procédé de préparation de la pâte.

### EXEMPLE 1

Les scories sont introduites dans le mélange dès le début de la phase de préparation, en remplacement partiel des argiles et des schistes (par exemple en proportion comprise entre 5 % et 25 % en poids du mélange sec), afin d'être parfaitement incorporées dans la pâte. Après la pulvérisation finale, le mélange des matières subit une déferrisation pour minimiser sa teneur en fer métallique avant l'ajout d'eau.

### EXEMPLE 2

Alternativement, les scories brutes ne sont pas injectées au début de l'étape de préparation de la pâte, mais elles subissent d'abord un conditionnement spécifique comprenant un broyage, un criblage, une homogénéisation, une déferrisation et une stabilisation chimique. L'injection des scories conditionnées se fait alors dans la séquence de préparation de la pâte juste avant la sous-étape d'addition d'eau.

Lors de la cuisson à haute température le CaO et le MgO finement dispersés dans la pâte peuvent réagir avec le SiO₂ présent en abondance pour former des silicates ou d'autres composés stables.

Les briques ainsi produites sont d'excellente qualité, leur coût est réduit car les scories sont disponibles à bas prix. De plus, cette technique permet de contribuer au développement durable en économisant des matières premières non renouvelables telles que les argiles et les schistes.

De plus, cette technique permet encore de maximiser la récupération du fer métallique, sous la forme d'une déferrisation classique maintenue à l'aciérie et/ou d'une déferrisation complémentaire chez le briquetier. Par ailleurs, ces opérations de déferrisation permettent de conserver une teneur en fer du produit fini considérée comme étant dans des limites acceptables pour l'homme de métier, les défauts d'aspect tels que les taches de rouille étant par exemple prohibés en ce qui concerne les briques de parement et les tuiles.

## Revendications

1. Procédé de fabrication d'un élément de construction en terre cuite, tel que brique, bloc, tuile, pavé, etc., à partir de matières réfractaires telles que SiO₂ et Al₂O₃, des fondants tels que CaO, MgO, Na₂O et K₂O et des matières colorantes telles que Fe₂O₃ pour la couleur rouge, TiO₂ pour la couleur jaune et MnO pour la couleur noire, ledit procédé comprenant les étapes successives d'extraction des matières premières, de préparation d'une pâte, de moulage, de séchage et de cuisson, **caractérisé en ce que** des scories, de préférence des scories d'aciérie, sont ajoutées et mélangées à des argiles et à des schistes soit au début, soit au cours de l'étape de préparation de la pâte, en proportion comprise entre 5 et 50% en poids, de préférence entre 5 et 25% en poids, du mélange sec.

2. Procédé de fabrication selon la revendication 1, **caractérisé en ce que** lesdites scories comprennent :
- 20 à 60% de CaO dont une partie sous forme de CaO libre ;
- 5 à 25% de SiO₂ ;
- 0 à 20% d'Al₂O₃ ;
- 0 à 15% de MgO dont une partie sous forme de MgO libre ;
- 0 à 15% de manganèse total ;
- 10 à 40% de fer total, principalement sous forme d'oxydes.

3. Procédé de fabrication selon la revendication 2, **caractérisé en ce que** lesdites scories comprennent :
- 25 à 54% de CaO dont 1 à 10 % de CaO libre ;
- 8 à 18% de SiO₂ ;
- 1 à 10% d'Al₂O₃ ;
- 1 à 9% de MgO dont une partie sous forme de MgO libre ;
- 1 à 8% de manganèse total ;
- 14 à 30% de fer total, principalement sous forme d'oxydes.

4. Procédé de fabrication selon l'une quelconque des revendications 1 à 3, **caractérisé en ce que** la préparation de la pâte comporte au moins les opérations successives suivantes :
- un broyage grossier du mélange d'argiles, de schistes et de scories qui sont introduites au début de l'étape de préparation de la pâte ;
- une addition d'agents correcteurs, tels que du sable amaigrissant et de colorants tels que les oxydes métalliques Fe₂O₃, TiO₂ et MnO ;
- une pulvérisation finale du mélange pour obtenir une poudre fine ;
- une addition d'eau, jusqu'à 30% et
- un malaxage.

5. Procédé de fabrication selon la revendication 4, **caractérisé en ce qu'**une opération additionnelle de déferrisation du mélange est effectuée après l'opération de pulvérisation finale.

6. Procédé de fabrication selon la revendication 4, **caractérisé en ce qu'**une opération additionnelle de déferrisation du mélange est effectuée après l'opération de broyage grossier.

7. Procédé de fabrication selon l'une quelconque des revendications 1 à 3, **caractérisé en ce que** la préparation de la pâte comporte une opération séparée de conditionnement spécifique des scories et au moins les opérations successives suivantes :
- un broyage grossier du mélange d'argiles et de schistes ;
- une addition d'agents correcteurs, tels que du sable amaigrissant et de colorants tels que les oxydes métalliques Fe₂O₃, TiO₂ et MnO ;
- une pulvérisation finale du mélange pour obtenir une poudre fine ;
- une addition d'eau, jusqu'à 30% et
- un malaxage,
les scories ayant subi ledit conditionnement spécifique étant introduites dans le mélange avant l'opération de broyage du mélange d'argiles et de schistes, avant l'opération d'addition d'agents correcteurs, avant l'opération de pulvérisation finale ou avant l'opération d'addition d'eau, et de préférence juste avant cette dernière opération.

8. Procédé de fabrication selon la revendication 7, **caractérisé en ce que** l'opération séparée de conditionnement spécifique des scories comprend l'une ou plusieurs des opérations suivantes : un broyage, un criblage, une homogénéisation, une déferrisation, une carbonatation, une activation et une stabilisation chimique.

9. Procédé de fabrication selon l'une quelconque des revendications précédentes, **caractérisé en ce que** le moulage est réalisé soit dans des moules à empreinte simple où multiple, soit au moyen d'une étireuse.

10. Procédé de fabrication selon la revendication 9, **caractérisé en ce que** :
- les moules sont sablés, puis remplis de pâte ;
- après démoulage, les moules sont nettoyés à l'eau puis réutilisés.

11. Procédé de fabrication selon la revendication 9, **caractérisé en ce que** l'étireuse produit une colonne continue de matière de section géométrique régulière, qui est ensuite découpée en éléments individuels.

12. Procédé de fabrication selon l'une quelconque des revendications précédentes, **caractérisé en ce que** ledit séchage est réalisé entre 2 et 4 jours dans des chambres appropriées où la température et le degré d'humidité sont rigoureusement contrôlés.

13. Procédé de fabrication selon l'une quelconque des revendications précédentes, **caractérisé en ce que** ledit cycle de cuisson dure de 2 à 6 jours et se fait en 3 phases selon une courbe propre à chaque qualité d'élément de construction précité :
- une phase de préchauffage qui permet d'atteindre progressivement une température de l'ordre de 800°C ;
- une phase de cuisson proprement dite qui assure le frittage de la matière à des températures pouvant atteindre 1200°C, des modifications chimiques et physiques à ces températures permettant de former des liaisons céramiques ;
- une phase de refroidissement lent qui évite notamment la fissuration desdits éléments de construction précités et permet d'obtenir la bonne coloration.
